# EUROPÄISCHE PATENTANMELDUNG

(11) **EP 1 106 869 A1**
(43) Veröffentlichungstag der Anmeldung: **13.06.2001**
(21) Anmeldenummer: 00126416.7
(22) Anmeldetag: 05.12.2000
(51) Int. Cl.: F16H 55/08

(54) **Verzahnung**

(30) Priorität: 06.12.1999 DE 19958670
(71) Anmelder: Reichelt, Martin, 85591 Vaterstetten (DE)
(72) Erfinder: Reichelt, Martin, 85591 Vaterstetten (DE)

(57) **Zusammenfassung**

Zur Erhöhung der Zahnfußfestigkeit von Zahnrädern besteht die an die Zahnflanke angrenzende Seitenfläche der Verzahnung aus einer konvexen wulstartigen Erhöhungsfläche (12) von Zahn zu Zahn umlaufend am Rand der Zahnflanke, weiterhin aus einer krümmungsfreien oder konkaven Restfläche (14) im Bereich der Symmetrieachse des Zahnes und schließlich aus einer tangentialen stetigen Übergangsfläche (16) zwischen Erhöhungsfläche und Restfläche. Hierdurch wird eine Annäherung an eine homogene Spannungsverteilung im Zahnfuß erreicht.

## Beschreibung

Die Erfindung betrifft eine Verzahnung für Zahnräder aller Art wie Stirn-, Kegel- oder Kronräder gemäß dem Oberbegriff des Patentanspruchs 1.

Beispielsweise aus der WO 98/45623 Al ist die konventionelle Ausbildung der Zähne von Zahnrädern bekannt. Die dortigen Figuren 3A, 3B 3C und 3D zeigen Stirn- und Kegelräder, deren Zähne angrenzend an die Zahnflanken Seitenflächen aufweisen, die eben, zylindrisch, kegel- oder kugelförmig bzw. toroidal ausgebildet sind. Zur Verdeutlichung dieser konventionellen Zahnausbildung sind in den Figuren 9 und 10 der vorliegenden Anmeldung die entsprechenden Seitenflächen als S11, S12 und S13 bezeichnet. Hauptmerkmal dieser Seitenflächen ist eine konstante Krümmung ohne Wendepunkte im Krümmungsverlauf.

Nach Teschner, M. und Matthek, C., Struktur- und Formoptimierung mechanischer Bauteile durch Simulation biologischer Designfindung, Sonderausgabe von ATZ und MTZ, Werkstoffe im Automobilbau, 1997/98, ist aus der Wachstumsbiologie von Bäumen prinzipiell bekannt, daß an Stellen hoher Spannungen (z.B. an Astlöchern, vgl. dortiges Bild 1b) zusätzliches Material angelagert wird, um sich dem Idealzustand einer homogenen Spannungsverteilung an der Oberfläche anzunähern. Die wulstartige Anlagerung dieses zusätzlichen Materials findet auch hinausgehend über die ursprünglich hauptsächlich zylindrische Oberfläche des Baumstammes statt.

Die Aufgabe der Erfindung besteht darin, die Zahnfußfestigkeit von Zahnrädern zu erhöhen.

Erfindungsgemäß wird diese Aufgabe dadurch gelöst, daß an zumindest einem Rand der Verzahnung in Zahnbreitenrichtung die jeweils angrenzende Seitenfläche aus einer konvexen wulstartigen Erhöhungsfläche von Zahn zu Zahn umlaufend am Rand der Zahnfußausrundungsflächen, der Zahnflankenflächen, falls vorhanden der Zahnkopfausrundungsflächen und der Zahnkopfflächen, weiterhin aus einer krümmungsfreien oder konkaven Restfläche im Bereich der Symmetrieachse des Zahnes und schließlich aus einer tangentialen stetigen Übergangsfläche zwischen der Erhöhungsfläche und der Restfläche besteht.

Durch diese Ausführung der Seitenflächen erfolgt eine Annäherung an eine homogene Spannungsverteilung im Material, wodurch die auftretenden Zahnfußspannungen im Betrieb herabgesetzt werden. Damit wird die Gefahr eines Anrisses im Zahnfuß als Beginn des Versagens deutlich verringert. Ebenso wird die Festigkeit gegen Gewaltbruch erhöht. Ohne Vergrößerung des Zahnrades können somit höhere Drehmomente übertragen werden.

Nach einer Weiterbildung kann die tangentiale stetige Übergangsfläche auch entfallen und die wulstartige Erhöhungsfläche direkt tangential und stetig in die krümmungsfreie oder konkave Restfläche übergehen.

Die wulstartige Erhöhungsfläche besitzt in einem Schnitt quer zur Zahnhöhenrichtung einen Krümmungsradius, der zwischen 2% und 20%, vorzugsweise etwa 12,5% (d.h. ein Achtel) der Zahndicke, gemessen in Mitte der Zahnhöhe, beträgt. Dieser Krümmungsradius kann über die Zahnhöhe konstant sein, sich aber auch in Richtung zum Zahnkopf verringern bzw. ganz verschwinden, wodurch eine beanspruchungsgerechte Ausbildung erreicht werden kann. Anstelle eines kreisbogenförmigen Krümmungsradius' kann auch eine andere gekrümmte Kontur, z.B. in elliptischer Form vorgesehen sein. Die Restfläche ist gegenüber dem höchsten Punkt der Erhöhungsfläche um einen Betrag von 2% bis 20%, vorzugsweise etwa 12,5% (d.h. ein Achtel) der Zahndicke, gemessen in Mitte der Zahnhöhe, zurückgesetzt.

Die erfindungsgemäße Ausführung der Verzahnung läßt sich bei allen Zahnradarten anwenden, insbesondere bei Stirn-, Kegeloder Kronrädern mit gerader Verzahnung, Schrägverzahnung oder Spiralverzahnung, bei allen Verzahnungsarten wie z.B. Evolventen-, Zykloiden-, Kreisbogenverzahnungen oder geradflankigen (Paß-)Verzahnungen mit ebenen Flächen als Zahnflanken, bei Verzahnungen mit oder ohne definiertes Tragbild (Breitenballigkeit), bei Verzahnungen mit oder ohne Kopf- oder Fußrücknahme (Höhenballigkeit), bei Verzahnungen mit kreis- bzw. kreisbogenförmiger oder elliptischer Zahnfußausrundung. Insbesondere bei Zahnrädern, die zur Vermeidung des sog. Randtragens ohnehin ein definiertes Tragbild aufweisen, wird die Zahnflankenfestigkeit nicht herabgesetzt.

Die oben beschriebenen Maßnahmen zur Erhöhung der Zahnfußfestigkeit können bei Laufverzahnungen wie Gangrädern (Losrädern oder Festrädern) von Stufenwechselgetrieben oder Differentialkegelrädern angewendet werden. Sie können aber auch bei Paßverzahnungen wie Kuppelverzahnungen von Kupplungskörpern von Gangrädern oder mit den Gangrädern einteilig hergestellten Kuppelverzahnungen Anwendung finden. Schließlich lassen sich diese Maßnahmen auch kombiniert bei Gangrädern sowohl an der Lauf-, als auch an der Kuppelverzahnung anwenden.

Auch bei (ur- oder umformtechnisch hergestellten) Kegelrädern für z.B. Differentiale, die am inneren und/oder äußeren Zahnende am Zahnfuß in der Zahnlücke bereits zusätzliches Material als Verstärkung besitzen, lassen sich die erfindungsgemäßen Maßnahmen zur weiteren Festigkeitserhöhung anwenden. Hierbei reicht die wulstartige Erhöhung entlang der Zahnflanke bis zu diesen Verstärkungen am Zahnfuß. Sinngemäß gilt dies auch für Kegelräder mit Zahnflanken, die am Zahnkopf durch eine beliebige Kontur am inneren und/oder äußeren Zahnende begrenzt sind.

Ebenso sind die erfindungsgemäßen Maßnahmen einsetzbar bei Verzahnungen mit Anspitzungen einer Seitenfläche, z.B. Kuppelverzahnungen von Gangrädern oder Laufverzahnungen von Schieberädern für Rückwärtsgänge.

Die erfindungsgemäßen Maßnahmen sind für Zahnräder aus Metall und Kunststoff gleichermaßen geeignet.

Vorzugsweise lassen sich die erfindungsgemäßen Maßnahmen an ur- oder umgeformten Zahnrädern darstellen, d.h. gegossenen, gespritzten, gesinterten, gerollten, taumelgeschmiedeten, warmgeschmiedeten, halbwarmgeschmiedeten, kaltgeschmiedeten oder kombiniert (halb-)warm-/ kaltgeschmiedeten Zahnrädern.

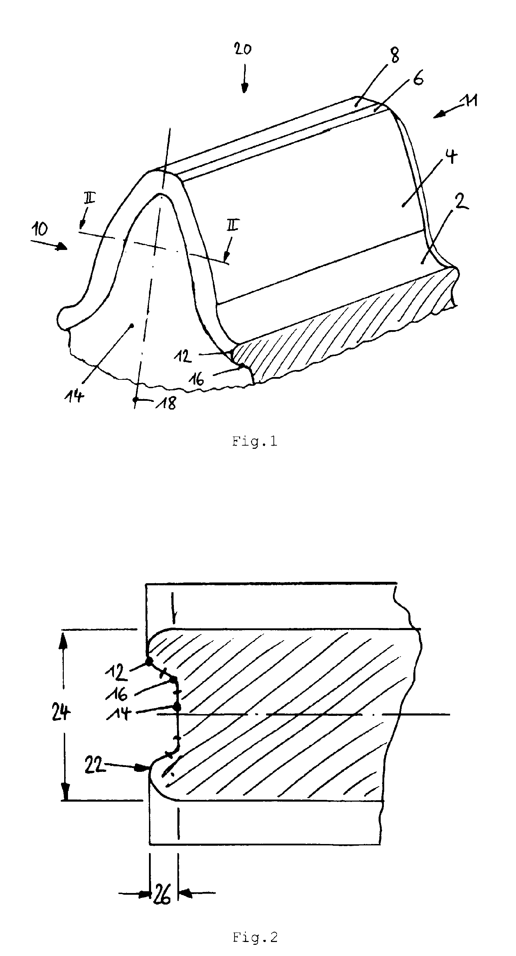

Nachfolgend wird die Erfindung anhand von Ausführungsbeispielen näher beschrieben. Es zeigen
- Fig. 1: eine gerade Stirnverzahnung gemäß der Erfindung
- Fig.2: einen Schnitt gemäß Fig.1 entlang der Linie II-II

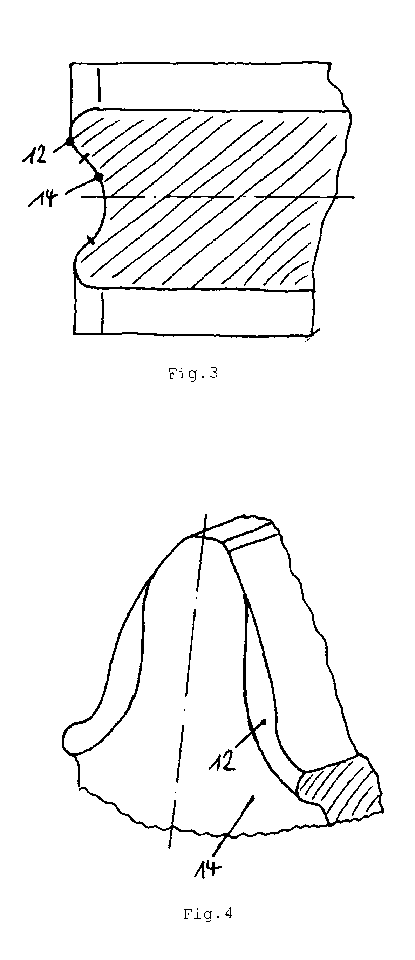

- Fig.3: eine Abwandlung der Erfindung gemäß Fig.2
- Fig.4: eine weitere Abwandlung der Erfindung gemäß Fig.2

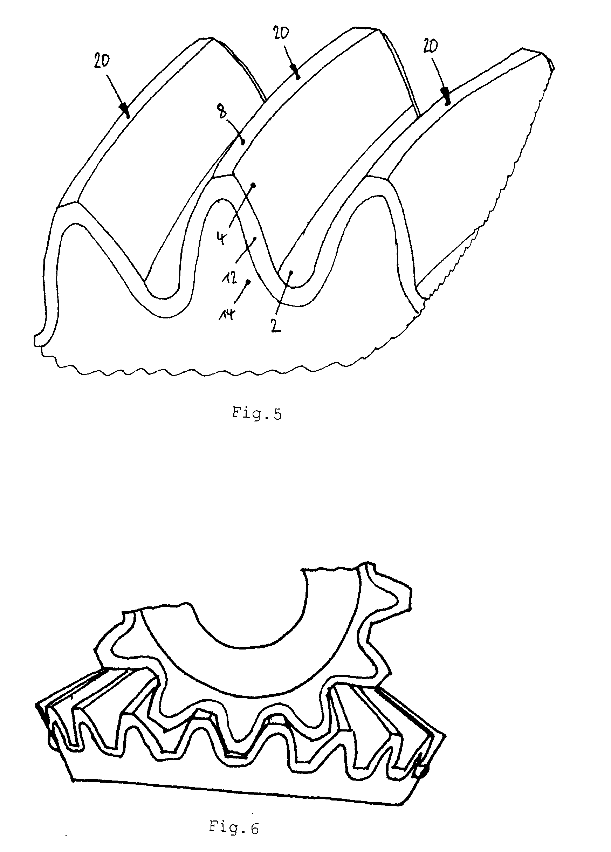

- Fig.5: eine Schrägverzahnung gemäß der Erfindung
- Fig.6: eine Kegelverzahnung gemäß der Erfindung

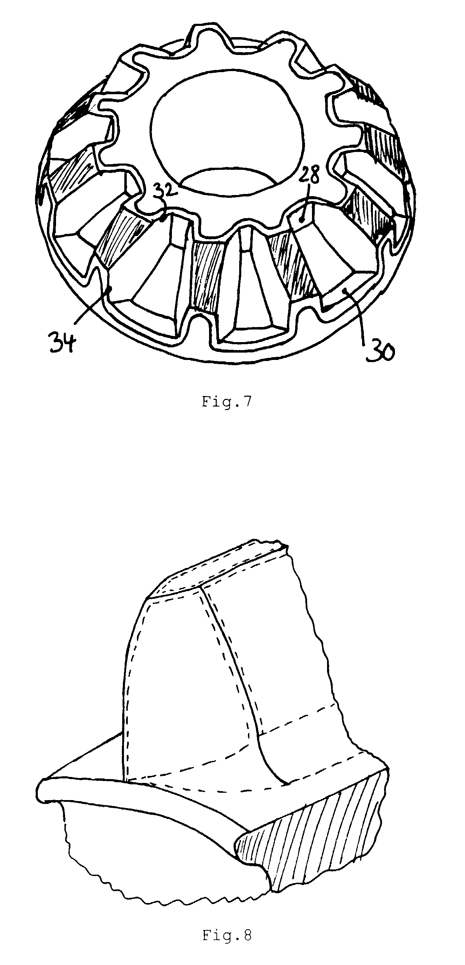

- Fig.7: eine Kegelverzahnung mit Verstärkungen und begrenzten Zahnflanken am inneren und äußeren Zahnende gemäß der Erfindung
- Fig. 8: eine Stirnverzahnung mit Anspitzung, z.B. eine Kuppelverzahnung von Gangrädern

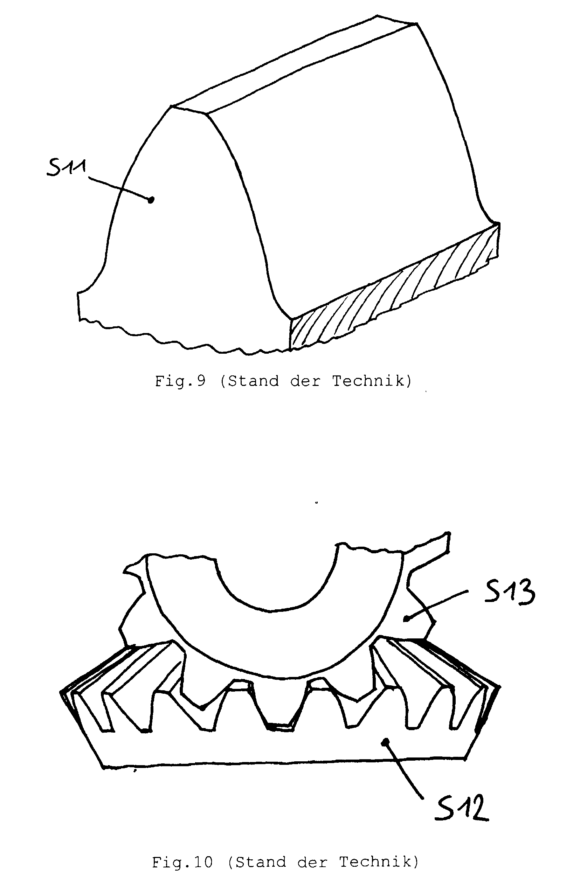

- Fig. 9: ein Stirnrad nach dem Stand der Technik
- Fig. 10: eine Kegelradpaarung nach dem Stand der Technik

Gemäß Fig.1 besteht die Verzahnung eines geradverzahnten Stirnrades aus Zahnfußausrundungsflächen (2), Zahnflankenflächen (4), Zahnkopfausrundungsflächen (6) und Zahnkopfflächen (8). An diese Flächen grenzt in Zahnbreitenrichtung jeweils eine Seitenfläche (10,11) an. Beispielhaft an der Seitenfläche (10) dargestellt, besteht diese aus drei Teilflächen. Die erste Teilfläche ist die konvexe wulstartige Erhöhungsfläche (12), die von Zahn (20) zu Zahn (20) umlaufend am Rand der Zahnfußausrundungsflächen (2), der Zahnflankenflächen (4), der Zahnkopfausrundungsflächen (6) und der Zahnkopfflächen (8) ausgebildet ist. Die zweite Teilfläche ist die krümmungsfreie Restfläche (14) im Bereich der Symmetrieachse (18) des Zahnes. Als dritte Teilfläche ist die tangentiale stetige Übergangsfläche (16) zwischen der Erhöhungsfläche (12) und der Restfläche (14) vorgesehen.

Wie in Fig.2 gezeigt, beträgt der Krümmungsradius (22) der Erhöhungsfläche (12) etwa ein Achtel, d.h. 12,5% der Zahndikke (24), gemessen in Mitte der Zahnhöhe. Die Restfläche (14) ist gegenüber dem höchsten Punkt der Erhöhungsfläche (12) um ein Maß (26) von etwa einem Achtel, d.h. 12,5% der Zahndicke, gemessen in Mitte der Zahnhöhe, zurückgesetzt.

Aus Fig.3 geht eine Ausbildung der Verzahnung ohne die Übergangsfläche (16), jedoch mit konkaver Restfläche (14) hervor, wodurch die Erhöhungsfläche (12) und die Restfläche (14) direkt tangential und stetig ineinander übergehen.

Aus Fig.4 geht die Ausbildung der wulstartigen Erhöhung nur über einen Teil der Zahnhöhe hervor.

Fig.5 zeigt die erfindungsgemäße Verzahnung an der Laufverzahnung eines schrägverzahnten Stirnrades, z.B. eines Gangrades von Stufenwechselgetrieben.

Fig.6 zeigt die erfindungsgemäße Verzahnung an Kegelverzahnungen, z.B. an einem Differentialkegelradpaar.

Fig.7 zeigt die erfindungsgemäße Verzahnung an einer Kegelverzahnung mit Verstärkungen (28 bzw. 30) in der Zahnlücke und beliebigen Konturen (32 bzw. 34) als Begrenzungen der Zahnflanke am Zahnkopf am inneren und äußeren Zahnende.

Fig.8 zeigt die erfindungsgemäße Verzahnung an einer Stirnverzahnung mit Anspitzung einer Seitenfläche, z.B. eine Kuppelverzahnung von Gangrädern oder eine Laufverzahnung von Schieberädern für Rückwärtsgänge.

Die Figuren 9 bzw. 10 zeigen Stirn- bzw. Kegelverzahnungen nach dem Stand der Technik.

## Patentansprüche

1. Verzahnung für Zahnräder mit Zahnfußausrundungsflächen (2), Zahnflankenflächen (4) und Zahnkopfflächen (8), sowie entweder mit Zahnkopfausrundungsflächen (6) oder mit einem direkten Übergang zwischen den Zahnflankenflächen (4) und den Zahnkopfflächen (8), und mit in Zahnbreitenrichtung jeweils angrenzenden Seitenflächen (10),
dadurch gekennzeichnet, daß
an zumindest einem Rand der Verzahnung in Zahnbreitenrichtung die jeweils angrenzende Seitenfläche (10) aus
a) einer konvexen wulstartigen Erhöhungsfläche (12) von Zahn zu Zahn umlaufend am Rand der Zahnfußausrundungsflächen (2), der Zahnflankenflächen (4), falls vorhanden der Zahnkopfausrundungsflächen (6) und der Zahnkopfflächen (8),
b) einer krümmungsfreien oder konkaven Restfläche (14) im Bereich der Symmetrieachse (18) des Zahnes und
c) einer tangentialen stetigen Übergangsfläche (16) zwischen der Erhöhungsfläche (12) und der Restfläche (14) besteht.

2. Verzahnung für Zahnräder mit Zahnfußausrundungsflächen (2), Zahnflankenflächen (4) und Zahnkopfflächen (8), sowie entweder mit Zahnkopfausrundungsflächen (6) oder mit einem direkten Übergang zwischen den Zahnflankenflächen (4) und den Zahnkopfflächen (8), und mit in Zahnbreitenrichtung jeweils angrenzenden Seitenflächen (10),
dadurch gekennzeichnet, daß
an zumindest einem Rand der Verzahnung in Zahnbreitenrichtung die jeweils angrenzende Seitenfläche (10) aus
a) einer konvexen wulstartigen Erhöhungsfläche (12) von Zahn zu Zahn umlaufend am Rand der Zahnfußausrundungsflächen (2), der Zahnflankenflächen (4), falls vorhanden der Zahnkopfausrundungsflächen (6) und der Zahnkopfflächen (8) und
b) aus einer krümmungsfreien oder konkaven Restfläche (14) im Bereich der Symmetrieachse (18) des Zahnes besteht, wobei
c) die Erhöhungsfläche (12) und die Restfläche (14) direkt tangential stetig ineinander übergehen.

3. Verzahnung für Zahnräder mit Zahnfußausrundungsflächen (2), Zahnflankenflächen (4) und Zahnkopfflächen (8), sowie entweder mit Zahnkopfausrundungsflächen (6) oder mit einem direkten Übergang zwischen den Zahnflankenflächen (4) und den Zahnkopfflächen (8), und mit in Zahnbreitenrichtung jeweils angrenzenden Seitenflächen (10),
dadurch gekennzeichnet, daß
an zumindest einem Rand der Verzahnung in Zahnbreitenrichtung die jeweils angrenzende Seitenfläche (10) aus
a) einer konvexen wulstartigen Erhöhungsfläche (12) am Rand der Zahnfußausrundungsflächen (2) und der Zahnflankenflächen (4), die von Zahnflankenfläche (4) zu Zahnflankenfläche (4) umläuft und sich in Richtung des Zahnkopfes verjüngt bis hin zu ihrem Entfall,
b) einer krümmungsfreien oder konkaven Restfläche (14) im Bereich der Symmetrieachse (18) des Zahnes und
c) einer tangentialen stetigen Übergangsfläche (16) zwischen der Erhöhungsfläche (12) und der Restfläche (14) besteht.

4. Verzahnung für Zahnräder mit Zahnfußausrundungsflächen (2), Zahnflankenflächen (4) und Zahnkopfflächen (8), sowie entweder mit Zahnkopfausrundungsflächen (6) oder mit einem direkten Übergang zwischen den Zahnflankenflächen (4) und den Zahnkopfflächen (8), und mit in Zahnbreitenrichtung jeweils angrenzenden Seitenflächen (10),
dadurch gekennzeichnet, daß
an zumindest einem Rand der Verzahnung in Zahnbreitenrichtung die jeweils angrenzende Seitenfläche (10) aus
a) einer konvexen wulstartigen Erhöhungsfläche (12) am Rand der Zahnfußausrundungsflächen (2) und der Zahnflankenflächen (4), die von Zahnflankenfläche (4) zu Zahnflankenfläche (4) umläuft und sich in Richtung des Zahnkopfes verjüngt bis hin zu ihrem Entfall,
b) aus einer krümmungsfreien oder konkaven Restfläche (14) im Bereich der Symmetrieachse (18) des Zahnes besteht, wobei
c) die Erhöhungsfläche (12) und die Restfläche (14) direkt tangential stetig ineinander übergehen.

5. Verzahnung für Zahnräder gemäß einem der vorangehenden Ansprüche,
dadurch gekennzeichnet, daß
a) die wulstartige Erhöhungsfläche (12) einen Krümmungsradius (22) von 2% bis 20%, vorzugsweise 12,5% (d.h. ein Achtel) der Zahndicke (24), gemessen in Mitte der Zahnhöhe, besitzt und
b) die Restfläche (14) gegenüber dem höchsten Punkt der Erhöhungsfläche (12) um einen Betrag (26) von 2% bis 20%, vorzugsweise 12,5% (d.h. ein Achtel) der Zahndicke (24), gemessen in Mitte der Zahnhöhe, zurückgesetzt ist.

6. Verzahnung für Zahnräder gemäß einem der vorangehenden Ansprüche,
dadurch gekennzeichnet, daß
die wulstartige Erhöhungsfläche (12) in einem Schnitt quer zur Zahnhöhenrichtung als Kreisbogen oder elliptisch ausgebildet ist.

7. Verzahnung für Zahnräder gemäß einem der vorangehenden Ansprüche,
dadurch gekennzeichnet, daß
der Krümmungsradius (22) über die Zahnhöhe konstant ist oder sich in Richtung zum Zahnkopf verringert.

8. Verzahnung für Zahnräder gemäß einem der vorangehenden Ansprüche,
dadurch gekennzeichnet, daß
es sich um die Verzahnung eines Stirnrades, Kegelrades oder Kronrades mit gerader Verzahnung, Schrägverzahnung oder Spiralverzahnung handelt und sie mit oder ohne definiertes Tragbild (Breitenballigkeit), mit oder ohne Kopf-oder Fußrücknahme (Höhenballigkeit), und/oder mit kreis-bzw. bogenförmiger oder elliptischer Zahnfußausrundung ausgeführt ist.

9. Verzahnung für Zahnräder gemäß einem der vorangehenden Ansprüche,
dadurch gekennzeichnet, daß
es sich um die Verzahnung eines ur- oder umformtechnisch hergestellten Kegelrades mit oder ohne zusätzliches Material (28,30) in der Zahnlücke als Verstärkung am inneren und/oder äußeren Zahnende handelt.

10. Verzahnung für Zahnräder gemäß einem der vorangehenden Ansprüche,
dadurch gekennzeichnet, daß
es sich um die Verzahnung eines ur- oder umformtechnisch hergestellten Kegelrades mit oder ohne durch eine beliebige Kontur (23,34) am Zahnkopf begrenzten Zahnflanken am inneren und/oder äußeren Zahnende handelt.

11. Verzahnung für Zahnräder gemäß einem der vorangehenden Ansprüche,
dadurch gekennzeichnet, daß
es sich um eine Verzahnung mit Anspitzung einer Seitenfläche handelt, z.B. die Kuppelverzahnung eines Gangrades oder die Laufverzahnung eines Schieberades für einen Rückwärtsgang.

12. Verzahnung für Zahnräder gemäß einem der vorangehenden Ansprüche,
dadurch gekennzeichnet, daß
es sich um eine Laufverzahnung von Gangrädern (Los-, Festräder) oder Differentialkegelrädern oder um die Kuppelverzahnung an Kupplungskörpern von zweiteilig hergestellten Gangrädern oder um die Kuppelverzahnung von einteilig hergestellten Gangrädern oder sowohl um die Laufals auch um die Kuppelverzahnung eines Gangrades handelt.

13. Verzahnung für Zahnräder gemäß einem der vorangehenden Ansprüche,
dadurch gekennzeichnet, daß
das Zahnrad aus Metall oder Kunststoff hergestellt ist.

14. Verzahnung für Zahnräder gemäß einem der vorangehenden Ansprüche,
dadurch gekennzeichnet, daß
das Zahnrad ur- oder umgeformt ist, insbesondere gegossen, gespritzt, gesintert, gerollt, taumelgeschmiedet, warmgeschmiedet, kaltgeschmiedet oder kombiniert warm-/ kaltgeschmiedet.
